(19) Europäisches Patentamt / European Patent Office / Office européen des brevets

(11) **EP 4 485 136 B1**

(12) **EUROPEAN PATENT SPECIFICATION**

(45) Date of publication and mention
of the grant of the patent:
**01.04.2026 Bulletin 2026/14**

(51) International Patent Classification (IPC):
**G06F 1/20** (2006.01)       **G06F 1/08** (2006.01)
**G06F 1/324** (2019.01)      **G05B 11/42** (2006.01)

(21) Application number: **23843139.9**

(52) Cooperative Patent Classification (CPC):
**G05B 11/42; G06F 1/20; G06F 1/206;
G06F 1/3215; G06F 1/324**

(22) Date of filing: **03.05.2023**

(86) International application number:
**PCT/KR2023/006000**

(87) International publication number:
**WO 2024/019280 (25.01.2024 Gazette 2024/04)**

(54) **METHOD AND DEVICE FOR CONTROLLING HEAT CAUSED BY ELECTRONIC DEVICE ON BASIS OF PID CONTROLLER**

VERFAHREN UND VORRICHTUNG ZUR STEUERUNG DER DURCH EINE ELEKTRONISCHE VORRICHTUNG VERURSACHTEN WÄRME AUF DER BASIS EINES PID-REGLERS

PROCÉDÉ ET DISPOSITIF DE MAÎTRISE DE CHALEUR CRÉÉE PAR UN DISPOSITIF ÉLECTRONIQUE À BASE DE CONTRÔLEUR PID

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **19.07.2022 KR 20220089205
29.08.2022 KR 20220108455**

(43) Date of publication of application:
**01.01.2025 Bulletin 2025/01**

(73) Proprietor: **Samsung Electronics Co., Ltd
Suwon-si, Gyeonggi-do 16677 (KR)**

(72) Inventors:
• **LEE, Sangmin**
 **Suwon-si, Gyeonggi-do 16677 (KR)**
• **BANG, Sungyong**
 **Suwon-si, Gyeonggi-do 16677 (KR)**
• **KIM, Jongwoo**
 **Suwon-si, Gyeonggi-do 16677 (KR)**
• **KIM, Hakryoul**
 **Suwon-si, Gyeonggi-do 16677 (KR)**
• **KIM, Mooyoung**
 **Suwon-si, Gyeonggi-do 16677 (KR)**

(74) Representative: **Walaski, Jan Filip et al
Venner Shipley LLP
200 Aldersgate
London EC1A 4HD (GB)**

(56) References cited:
KR-A- 20140 010 457    KR-A- 20140 136 968
KR-A- 20160 138 479    KR-A- 20170 019 454
KR-A- 20180 021 831    US-A1- 2012 311 357
US-A1- 2014 365 793    US-A1- 2015 277 395

**Description**

**TECHNICAL FIELD**

The following disclosure relates to technology for controlling heat generation of an electronic device based on a proportional-integral-differential (PID) controller.

**BACKGROUND ART**

Conventionally, when the surface temperature of an electronic device reaches a level that could negatively affect an operation of hardware, the heat generation of the electronic device is controlled using a fixed control method to protect a chipset or using a predetermined control method according to the surface temperature of the electronic device. However, the conventional method of controlling heat generation of an electronic device has a problem that the method cannot automatically respond to an undefined heat generation situation, so an additional software task is required. Furthermore, since the conventional method of controlling heat generation of an electronic device does not immediately reflect a change in the surface temperature of the electronic device, when the surface temperature of the electronic device is greater than a certain temperature, hardware (e.g., a central processing unit (CPU) or a graphics processing unit (GPU)) cannot be used above a certain clock, causing continuous deterioration of hardware performance.

US 2015/277395 A1 discloses a method and system for optimizing performance of a PCD while mitigating thermal generation.

US 2012/311357 Al discloses multi-level thermal management in an electronic device.

**DISCLOSURE OF THE INVENTION**

**TECHNICAL SOLUTIONS**

An electronic device, a method performed by a processor, and a non-transitory computer-readable storage medium according to the independent claims are provided. Optional features are set out in the dependent claims.

**BRIEF DESCRIPTION OF DRAWINGS**

FIG. 1 is a block diagram illustrating an electronic device in a network environment, according to various embodiments.

FIG. 2 is a flowchart schematically illustrating an operation of controlling surface temperature by an electronic device, according to an embodiment.

FIG. 3 is a diagram schematically illustrating a process of controlling surface temperature of an electronic device by the electronic device, according to an embodiment.

FIG. 4 is a diagram illustrating a process of controlling heat generation of an electronic device for each proportional-integral-differential (PID) level by a PID controller, according to an embodiment.

FIG. 5 is a table illustrating an example of the type of events preset in an electronic device and a PID level corresponding to each event.

FIG. 6 is a diagram illustrating a process of determining the minimum clock of a limit clock of a central processing unit (CPU) by a PID controller, according to an embodiment.

FIG. 7 is a diagram illustrating a process of determining the minimum clock of a limit clock of a graphics processing unit (GPU) by a PID controller, according to an embodiment.

FIG. 8 is a diagram illustrating a process of determining the minimum speed of a transmission control protocol (TCP) limit speed by a PID controller, according to an embodiment.

BEST MODE FOR CARRYING OUT THE INVENTION

Hereinafter, embodiments will be described in detail with reference to the accompanying drawings. When describing the embodiments with reference to the accompanying drawings, like reference numerals refer to like elements and a repeated description related thereto will be omitted.

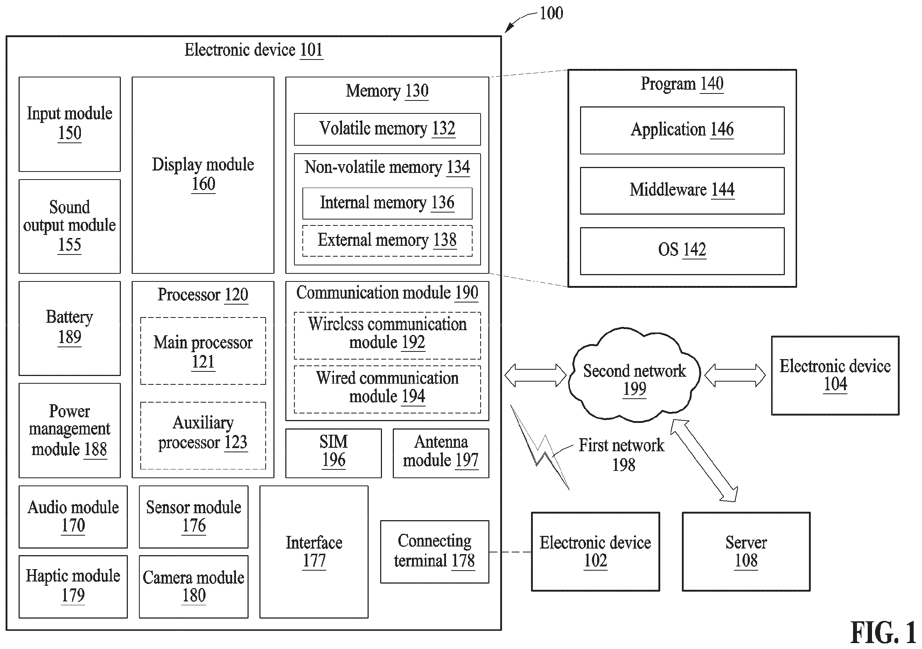

FIG. 1 is a block diagram illustrating an electronic device 101 in a network environment 100, according to various embodiments. Referring to FIG. 1, the electronic device 101 in the network environment 100 may communicate with an electronic device 102 via a first network 198 (e.g., a short-range wireless communication network), or communicate with at least one of an electronic device 104 and a server 108 via a second network 199 (e.g., a long-range wireless communication network). According to an embodiment, the electronic device 101 may communicate with the electronic device 104 via the server 108. According to an embodiment, the electronic device 101 may include a processor 120, a memory 130, an input module 150, a sound output module 155, a display module 160, an audio module 170, and a sensor module 176, an interface 177, a connecting terminal 178, a haptic module 179, a camera module 180, a motor 187, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added to the electronic device 101. In some embodiments, some of the components (e.g., the sensor module 176, the camera module 180, or the antenna module 197) may be integrated as a single component (e.g., the display module 160).

The processor 120 may execute, for example, software (e.g., a program 140) to control at least one other component (e.g., a hardware or software component) of the electronic device 101 connected to the processor 120 and may perform various data processing or computations. According to an embodiment, as at least a part of data processing or computations, the processor 120 may store a command or data received from another component (e.g., the sensor module 176 or the communication module 190) in a volatile memory 132, process the command or the data stored in the volatile memory 132, and store resulting data in a non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from or in conjunction with the main processor 121. For example, when the electronic device 101 includes the main processor 121 and the auxiliary processor 123, the auxiliary processor 123 may be adapted to consume less power than the main processor 121 or to be specific to a specified function. The auxiliary processor 123 may be implemented separately from the main processor 121 or as a part of the main processor 121.

The auxiliary processor 123 may control at least some of functions or states related to at least one (e.g., the display module 160, the sensor module 176, or the communication module 190) of the components of the electronic device 101, instead of the main processor 121 while the main processor 121 is in an inactive (e.g., sleep) state or along with the main processor 121 while the main processor 121 is an active state (e.g., executing an application). According to an embodiment, the auxiliary processor 123 (e.g., an ISP or a CP) may be implemented as a portion of another component (e.g., the camera module 180 or the communication module 190) that is functionally related to the auxiliary processor 123. According to an embodiment, the auxiliary processor 123 (e.g., an NPU) may include a hardware structure specifically for artificial intelligence model processing. An artificial intelligence model may be generated by machine learning. The machine learning may be performed by, for example, the electronic device 101, in which artificial intelligence is performed, or performed via a separate server (e.g., the server 108). Learning algorithms may include, but are not limited to, for example, supervised learning, unsupervised learning, semi-supervised learning, or reinforcement learning. The artificial intelligence (AI) model may include a plurality of artificial neural network layers. An artificial neural network may include, for example, a deep neural network (DNN), a convolutional neural network (CNN), a recurrent neural network (RNN), a restricted Boltzmann machine (RBM), a deep belief network (DBN), and a bidirectional recurrent deep neural network (BRDNN), a deep Q-network, or a combination of two or more thereof, but is not limited thereto. The AI model may additionally or alternatively include a software structure other than the hardware structure.

The memory 130 may store various pieces of data used by at least one component (e.g., the processor 120 or the sensor module 176) of the electronic device 101. The various pieces of data may include, for example, software (e.g., the program 140) and input data or output data for a command related thereto. The memory 130 may include the volatile memory 132 or the non-volatile memory 134.

The program 140 may be stored as software in the memory 130 and may include, for example, an operating system (OS) 142, middleware 144, or an application 146.

The input module 150 may receive, from outside (e.g., a user) the electronic device 101, a command or data to be used by another component (e.g., the processor 120) of the electronic device 101. The input module 150 may include, for example, a microphone, a mouse, a keyboard, a key (e.g., a button), or a digital pen (e.g., a stylus pen).

The sound output module 155 may output a sound signal to the outside of the electronic device 101. The sound output module 155 may include, for example, a speaker or a receiver. The speaker may be used for general purposes, such as playing multimedia or playing a recording. The receiver may be used to receive an incoming call. According to an embodiment, the receiver may be implemented separately from the speaker or as a part of the speaker.

The display module 160 may visually provide information to the outside (e.g., a user) of the electronic device 101. The display module 160 may include, for example, a control circuit for controlling a display, a hologram device, or a projector and control circuitry to control its corresponding one of the display, the hologram device, and the projector. According to an embodiment, the display module 160 may include a touch sensor adapted to detect a touch, or a pressure sensor adapted to measure the intensity of force of the touch.

The audio module 170 may convert sound into an electric signal or vice versa. According to an embodiment, the audio module 170 may obtain the sound via the input module 150 or output the sound via the sound output module 155 or an external electronic device (e.g., the electronic device 102, such as a speaker or headphones) directly or wirelessly connected to the electronic device 101.

The sensor module 176 may detect an operational state (e.g., power or temperature) of the electronic device 101 or an environmental state (e.g., a state of a user) external to the electronic device 101 and generate an electric signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used by the electronic device 101 to couple with the external electronic device (e.g., the electronic device 102) directly (e.g., by wire) or wirelessly. According to an embodiment, the interface 177 may include, for example, a high-definition multimedia interface (HDMI), a universal serial bus (USB) interface, a secure digital (SD) card interface, or an audio interface.

The connecting terminal 178 may include a connector via which the electronic device 101 may physically connect to an external electronic device (e.g., the electronic device 102). According to an embodiment, the connecting terminal 178 may include, for example, an HDMI connector, a USB connector, an SD card connector, or an audio connector (e.g., a headphones connector).

The haptic module 179 may convert an electric signal into a mechanical stimulus (e.g., a vibration or a movement) or an electrical stimulus, which may be recognized by a user via their tactile sensation or kinesthetic sensation. According to an embodiment, the haptic module 179 may include, for example, a motor, a piezoelectric element, or an electric stimulator.

The camera module 180 may capture a still image and moving images. According to an embodiment, the camera module 180 may include one or more lenses, image sensors, ISPs, and flashes.

The power management module 188 may manage power supplied to the electronic device 101. According to an embodiment, the power management module 188 may be implemented as, for example, at least a part of a power management integrated circuit (PMIC).

The battery 189 may supply power to at least one component of the electronic device 101. According to an embodiment, the battery 189 may include, for example, a primary cell, which is not rechargeable, a secondary cell, which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more CPs that are operable independently from the processor 120 (e.g., an AP) and that support direct (e.g., wired) communication or wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module, or a power line communication (PLC) module). A corresponding one of these communication modules may communicate with the external electronic device, for example, the electronic device 104, via the first network 198 (e.g., a short-range communication network, such as Bluetooth™, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., a LAN or a wide area network (WAN)). These various types of communication modules may be implemented as a single component (e.g., a single chip), or may be implemented as multiple components (e.g., multiple chips) separate from each other. The wireless communication module 192 may identify and authenticate the electronic device 101 in a communication network, such as the first network 198 or the second network 199, using subscriber information (e.g., international mobile subscriber identity (IMSI)) stored in the SIM 196.

The wireless communication module 192 may support a 5G network after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., a mmWave band) to achieve, e.g., a high data transmission rate. The wireless communication module 192 may support various technologies for securing performance on a high-frequency band, such as, e.g., beamforming, massive multiple-input and multiple-output (MIMO), full dimensional MIMO (FD-MIMO), an array antenna, analog beam-forming, or a large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20 Gbps or more) for implementing eMBB, loss coverage (e.g., 164 dB or less) for implementing mMTC, or U-plane latency (e.g., 0.5 ms or less for each of downlink (DL) and uplink (UL), or a round trip of 1 ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element including a conductive material or a conductive pattern formed in or on a substrate (e.g., a printed circuit board (PCB)). According to an embodiment, the antenna module 197 may include a plurality of antennas (e.g., an antenna array). In such a case, at least one antenna appropriate for a communication scheme used in a communication network, such as the first network 198 or the second network 199, may be selected by, for example, the communication module 190 from the plurality of antennas. The signal or power may be transmitted or received between the communication module 190 and the external electronic device via the at least one selected antenna. According to an embodiment, another component (e.g., a radio frequency integrated circuit (RFIC)) other than the radiating element may be additionally formed as a part of the antenna module 197.

According to various embodiments, the antenna module 197 may form a mmWave antenna module. According to an embodiment, the mmWave antenna module may include a PCB, an RFIC on a first surface (e.g., the bottom surface) of the PCB, or adjacent to the first surface of the PCB and capable of supporting a designated high-frequency band (e.g., a mmWave band), and a plurality of antennas (e.g., array antennas) disposed on a second surface (e.g., the top or a side surface) of the PCB, or adjacent to the second surface of the PCB and capable of transmitting or receiving signals of the designated high-frequency band.

At least some of the above-described components may be coupled mutually and exchange signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device (e.g., the electronic device 104) via the server 108 coupled with the second network 199. Each of the external electronic devices (e.g., the electronic device 102 or 104) may be a device of the same type as or a different type from the electronic device 101. According to an embodiment, all or some of operations to be executed by the electronic device 101 may be executed by one or more external electronic devices (e.g., the electronic devices 102 and 104 and the server 108). For example, if the electronic device 101 needs to perform a function or a service automatically, or in response to a request from a user or another device, the electronic device 101, instead of, or in addition to, executing the function or the service, may request the one or more external electronic devices to perform at least part of the function or service. The one or more external electronic devices receiving the request may perform the at least part of the function or service, or an additional function or an additional service related to the request and may transfer a result of the performance to the electronic device 101. The electronic device 101 may provide the result, with or without further processing the result, as at least part of a response to the request. To that end, cloud computing, distributed computing, mobile edge computing (MEC), or client-server computing technology may be used, for example. The electronic device 101 may provide ultra low-latency services using, e.g., distributed computing or MEC. In an embodiment, the external electronic device (e.g., the electronic device 104) may include an Internet-of-things (IoT) device. The server 108 may be an intelligent server using machine learning and/or a neural network. According to an embodiment, the external electronic device (e.g., the electronic device 104) or the server 108 may be included in the second network 199. The electronic device 101 may be applied to intelligent services (e.g., a smart home, a smart city, a smart car, or healthcare) based on 5G communication technology or IoT-related technology.

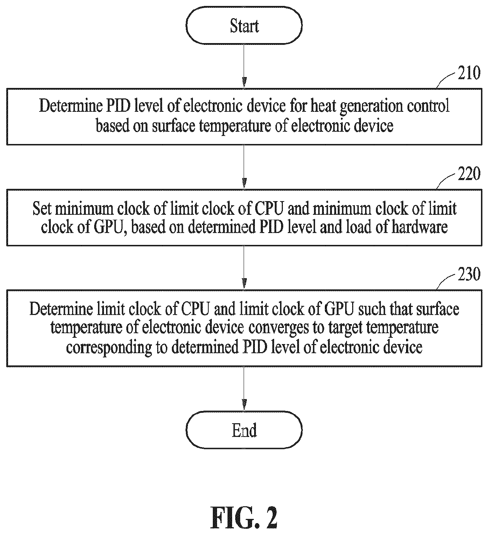

FIG. 2 is a flowchart schematically illustrating an operation of controlling surface temperature by an electronic device, according to an embodiment.

An electronic device according to an embodiment may include a processor that controls surface temperature of the electronic device. The processor may include a temperature sensor, a monitoring unit, and a proportional-integral-differential (PID) controller.

The temperature sensor may measure the surface temperature of the electronic device. For example, the temperature sensor may include a thermistor of which an electrical resistance value changes depending on the temperature and may measure the surface temperature of the electronic device through the thermistor. The temperature sensor may periodically transmit the measured surface temperature of the electronic device to the PID controller.

The monitoring unit may monitor a load of hardware. For example, the monitoring unit may monitor a load of a CPU and a load of a GPU. In addition, the monitoring unit may monitor the throughput of data transmission from the hotspot and wireless-fidelity (Wi-Fi). The monitoring unit may periodically transmit the monitored load of the hardware (e.g., the load of the CPU or the load of the GPU) to the PID controller. Additionally, the monitoring unit may monitor the occurrence of preset events. The event may be, for example, an operation of increasing the load of the hardware such as an operation of using a third-party camera application, an operation of using a multi-window mode, an operation of charging a battery, etc. For example, each of a plurality of events may occur individually and proceed simultaneously, or no event may occur. When the occurrence of at least one of the preset events is monitored, the monitoring unit may transmit information about the event that occurred to the PID controller.

The PID controller may measure an output of an object to be controlled in a feedback control method, calculate an error by comparing the output with a setpoint, and compute a control value required for control, using the calculated error. The PID controller may compute the control value by proportioning, integrating, and differentiating the error between the output and the setpoint. The PID controller may be configured to calculate a control value (MV(t)) by adding three terms (a proportional term, an integral term, and a differential term), as shown in Equation 1 below.

[Equation 1]

$$MV(t) = K_p e(t) + K_i \int_0^t e(t)\, dt + K_d \frac{de}{dt}$$

In Equation 1, a proportional term $K_p e(t)$ may act as control that is proportional to the size of a current-state error, an integral term $K_i \int_0^t e(t)\, dt$ may act to eliminate a steady-state error and allow an output to converge to a setpoint, and a differential term $K_d \frac{de}{dt}$ may apply a brake to a rapid change in the output, so overshoot may be reduced and stability may be improved. In Equation 1, Kp, Ki, and kd are PID parameters and may be tuned to become intended control. Hereinafter, an operation of the PID controller is described in more detail.

In operation 210, the PID controller may determine a PID level of the electronic device for heat generation control based on the surface temperature of the electronic device. The PID level may include, but is not limited to, a first level, a second level, a third level, and a fourth level, and the PID level may have more or fewer levels. The PID controller may further limit clock use of the hardware by lowering the minimum clock of a limit clock of the hardware (e.g., the CPU or the GPU) as the PID level increases. Hereinafter, herein, it is described that the PID level increases in the order of the first level, the second level, the third level, and the fourth level.

In operation 220, the PID controller may set each of the minimum clock of a limit clock of a CPU and the minimum clock of a limit clock of a GPU, based on the determined PID level of the electronic device and the load of the hardware.

The limit clock may represent the maximum clock in which certain hardware may operate. That is, the limit clock of the CPU may represent the maximum clock in which the CPU may operate, and the limit clock of the GPU may represent the maximum clock in which the GPU may operate. For example, when the limit clock of the CPU is set as an A clock, an operating clock of the CPU may be limited to be less than the A clock. Likewise, when the limit clock of the GPU is determined to be a B clock, an operating clock of the GPU may be limited to be less than the B clock.

The PID controller may determine a range of the minimum clock of the limit clock of the CPU and a range of the minimum clock of the limit clock of the GPU for each PID level. The PID controller may determine the minimum clock of the limit clock of the CPU in the range of the minimum clock of the limit clock of the CPU according to the PID level of the electronic device. The PID controller may determine the minimum clock of the limit clock of the GPU in the range of the minimum clock of the limit clock of the GPU according to the PID level of the electronic device. Here, the minimum clock of the limit clock may represent the lowest clock that may be set as the maximum clock in which certain hardware may operate. Generally, when the minimum clock of the limit clock of the hardware decreases, the limit clock may be set to be low and the performance of the hardware may be limited, and when the minimum clock of the limit clock of the hardware increases, the limit clock may be set to be high and the performance of the hardware may be guaranteed. The range of the minimum clock of the limit clock may represent the range of clocks that may be set as the minimum clock of the limit clock.

The PID controller may decrease the minimum clock of the limit clock of the CPU as the load of the CPU increases and may increase the minimum clock of the limit clock of the CPU as the load of the CPU decreases. That is, the PID controller may limit the performance of the CPU by decreasing the minimum clock of the limit clock of the CPU as the load of the CPU increases and may control the heat generation of the electronic device by limiting the performance of the CPU. The PID controller may guarantee the performance of the CPU by increasing the minimum clock of the limit clock of the CPU as the load of the CPU decreases. The PID controller may determine that the load of the CPU has less influence on the heat generation of the electronic device as the load of the CPU decreases and then may increase the minimum clock of the limit clock of the CPU such that the CPU may operate with a high operating clock. Likewise, the PID controller may decrease the minimum clock of the limit clock of the GPU as the load of the GPU increases and may increase the minimum clock of the limit clock of the GPU as the load of the GPU decreases.

In operation 230, the PID controller may determine the limit clock of the CPU to be greater than or equal to the set minimum clock of the limit clock of the CPU and may determine the limit clock of the GPU to be greater than or equal to the set minimum clock of the limit clock of the GPU such that the surface temperature of the electronic device converges to a target temperature corresponding to the determined PID level of the electronic device.

The PID controller may use an existing limit clock of the CPU and an existing limit clock of the GPU as an input of the PID controller. The PID controller may set the target temperature corresponding to the PID level of the electronic device as a setpoint and may set the surface temperature of the electronic device measured in real time as an output. The PID controller may calculate the difference between the target temperature, which is the setpoint, and the surface temperature of the electronic device, which is the output, as an error. The PID controller may tune the parameters (e.g., Kp, Ki, and kd in Equation 1) of the PID controller so that the surface temperature of the electronic device may be controlled to the target temperature. The PID controller may calculate the control value (MV(t)) required for control, using the parameters of the PID controller and errors, and may determine the limit clock of the CPU and the limit clock of the GPU according to the calculated control value.

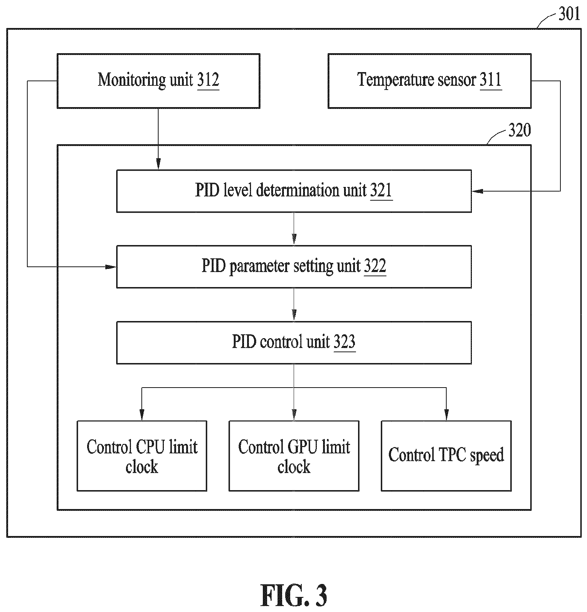

FIG. 3 is a diagram schematically illustrating a process of controlling surface temperature of an electronic device by the electronic device, according to an embodiment.

An electronic device (e.g., the electronic device 101 of FIG. 1) according to an embodiment may include a processor 301 that controls surface temperature of the electronic device. The processor 301 may include a temperature sensor 311, a monitoring unit 312, and a PID controller 320. The PID controller 320 may receive the surface temperature of the electronic device from the temperature sensor 311. The PID controller 320 may receive, from the monitoring unit 312, information about a load of hardware and an event that occurred. In addition, the PID controller 320 may receive state information (e.g., the throughput of data transmission) of the electronic device from the monitoring unit 312. The PID controller 320 may include a PID level determination unit 321, a PID parameter setting unit 322, and a PID control unit 323.

The PID level determination unit 321 may determine a PID level of the electronic device based on the surface temperature of the electronic device and an event that occurred in the electronic device. The PID parameter setting unit 322 may set parameters of the PID controller based on the determined PID level of the electronic device and the load of the hardware. The PID parameter setting unit 322 may set the minimum clock of a limit clock of a CPU and the minimum clock of a limit clock of a GPU, based on the determined PID level of the electronic device and the load of the hardware. The PID parameter setting unit 322 may tune the parameters of the PID controller by setting a target temperature corresponding to the PID level of the electronic device as a setpoint and setting the surface temperature of the electronic device as an output, under a condition of the set minimum clock of the limit clock of the CPU and the set minimum clock of the limit clock of the GPU.

The PID control unit 323 may determine the limit clock of the CPU and the limit clock of the GPU through PID control. The PID control unit 323 may control the heat generation of the electronic device by limiting an operating clock of the CPU to the determined limit clock of the CPU and limiting an operating clock of the GPU to the determined limit clock of the GPU. That is, the PID control unit 323 may control the surface temperature of the electronic device by adjusting the performance of the CPU and the GPU. Furthermore, the PID control unit 323 may also determine a transmission control protocol (TCP) limit speed through PID control. The TCP speed may represent a speed of transmitting a data packet and may mainly use bits per second (bps) as a unit. The TCP limit speed may represent the maximum speed at which the data packet may be transmitted. The PID control unit 323 may further control the heat generation of the electronic device by limiting the TCP speed to be less than or equal to the TCP limit speed. For example, the PID control unit 323 may control the surface temperature of the electronic device by limiting the TCP speed of a Wi-Fi network and lowering the performance of the Wi-Fi network.

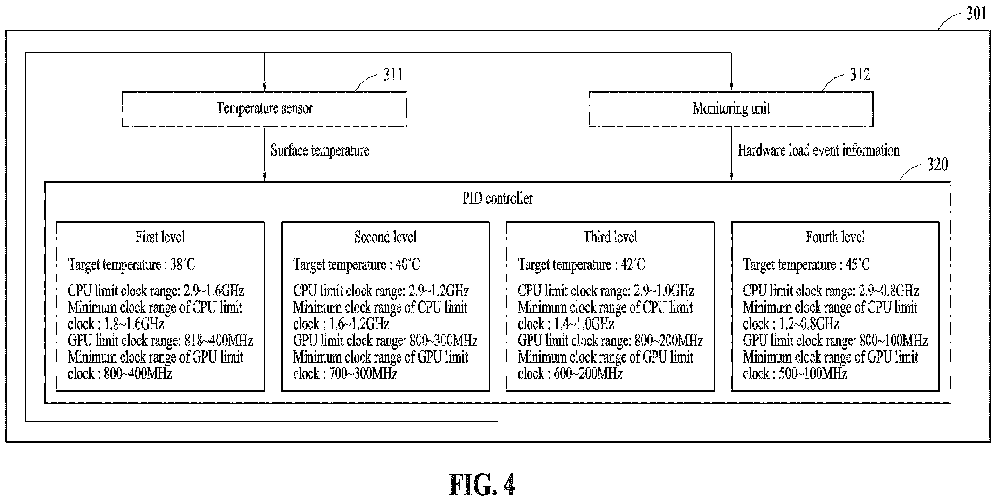

FIG. 4 is a diagram illustrating a process of controlling heat generation of an electronic device for each PID level by a PID controller, according to an embodiment.

According to an embodiment, the PID controller 320 may differently determine a PID level of the electronic device depending on whether an event that occurred exists.

According to an embodiment, when all preset events do not occur, the PID controller 320 may determine the PID level of the electronic device based only on the surface temperature of an electronic device 301. That is, when all preset events do not occur, the PID controller 320 may determine the PID level of the electronic device based only on the surface temperature of the electronic device. According to an embodiment, the PID controller 320 may determine the PID level of the electronic device to be a PID level corresponding to a temperature condition to which the surface temperature of the electronic device belongs. For example, a temperature condition corresponding to a first level may be a condition that is less than a first surface temperature (e.g., 40°C), a temperature condition corresponding to a second level may be a condition that is greater than or equal to the first surface temperature and less than a second surface temperature (e.g., 42°C), a temperature condition corresponding to a third level may be a condition that is greater than or equal to the second surface temperature and less than a third surface temperature (e.g., 45°C), and a temperature condition corresponding to a fourth level may be a condition that is greater than or equal to the third surface temperature. In this case, the PID controller 320 may determine the PID level of the electronic device to be the third level when the surface temperature of the electronic device is measured to be 44°C.

According to an embodiment, when the occurrence of at least one of the preset events is monitored by the monitoring unit 312, the PID controller 320 may determine the PID level of the electronic device to be the highest PID level among a PID level indicated by the at least one event that occurred and a PID level corresponding to the surface temperature of the electronic device. For example, when the occurrence of a plurality of events is monitored by the monitoring unit 312, the PID controller 320 may determine the PID level of the electronic device to be the highest PID level among a PID level indicated by each of the plurality of events and a PID level corresponding to the surface temperature of the electronic device.

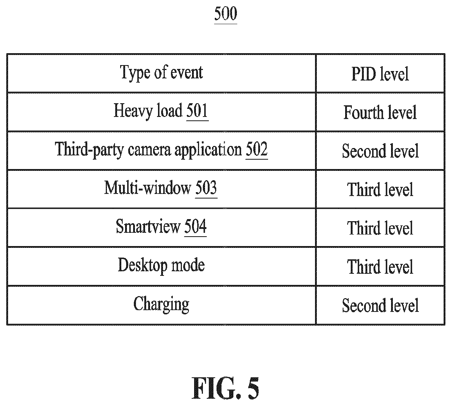

FIG. 5 is a table illustrating an example of the type of events preset in an electronic device and a PID level corresponding to each event. The electronic device may set an event in which a relatively high load of hardware is expected to indicate a high PID level and may set an event in which a relatively low load of hardware is expected to indicate a low PID level. For example, referring to a table 500 of FIG. 5, the electronic device may set a PID level indicated by an event 501 of a heavy load as a fourth level. The heavy load may represent a state in which the usage of a CPU is greater than or equal to 90% or the usage of a GPU is greater than or equal to 90%. In another example, the electronic device may set a PID level indicated by an event 502 of an operation of using a third-party camera application as a second level. In another example, the electronic device may set a PID level indicated by an event 503 of an operation of using a multi-window as a third level. In another example, the electronic device may set a PID level indicated by an event 504 of an operation (e.g., a screen mirroring operation) of using smartview as the second level.

Referring back to FIG. 4, the PID controller 320 may set the target temperature corresponding to the PID level for each PID level, the limit clock range of the CPU, the minimum clock range of the limit clock of the CPU, the limit clock range of the GPU, and the minimum clock range of the limit clock of the GPU. For example, the target temperature corresponding to the first level may be set to 38°C, the limit clock range of the CPU may be set from 1.6 gigahertz (GHz) to 2.9 GHz, the minimum clock range of the limit clock of the CPU may be set from 1.6 GHz to 1.8 GHz, the limit clock range of the GPU may be set from 350 megahertz (MHz) to 818 MHz, the minimum clock range of the limit clock of the GPU may be set from 400 MHz to 818 MHz, and the minimum clock range of the limit clock of the GPU may be set from 400 MHz to 800 MHz. However, when the minimum clock of the limit clock of the CPU is set, the limit clock range of the CPU may change, and when the minimum clock of the limit clock of the GPU is set, the limit clock range of the GPU may change. For example, when the minimum clock of the limit clock of the CPU is set to 1.7 GHz, the limit clock range of the CPU may change from 1.7 GHz to 2.9 GHz, and when the minimum clock of the limit clock of the GPU is set to 600 MHz, the limit clock range of the GPU may change from 600 MHz to 818 MHz.

According to an embodiment, as the PID level increases, the PID controller 320 may increase the target temperature corresponding to the PID level. For example, the PID controller 320 may increase the size of the target temperature in the order of first target temperature (e.g., 38°C) corresponding to the first level, second target temperature (e.g., 40°C) corresponding to the second level, third target temperature (e.g., 42°C) corresponding to the third level, and fourth target temperature (e.g., 44°C) corresponding to the fourth level.

According to an embodiment, as the PID level increases, the PID controller 320 may decrease a lower limit of the minimum clock range of the limit clock of the CPU and may decrease a lower limit of the minimum clock range of the limit clock of the GPU. For example, the PID controller 320 may set the lower limit of the minimum clock range of the limit clock of the CPU to 1.6 GHz at the first level, set the lower limit of the minimum clock range of the limit clock of the CPU to 1.2 GHz at the second level, and set the lower limit of the minimum clock range of the limit clock of the CPU to 1.0 GHz at the third level. As the PID level increases, the PID controller 320 may lower the minimum clock of the limit clock of the CPU by decreasing the lower limit of the minimum clock range of the limit clock of the CPU and may limit an operating clock of the CPU by lowering the minimum clock of the limit clock of the CPU. Likewise, the PID controller 320 may decrease the lower limit of the minimum clock range of the limit clock of the GPU as the PID level increases. For example, the PID controller 320 may set the lower limit of the minimum clock range of the limit clock of the GPU to 400 MHz at the first level, set the lower limit of the minimum clock range of the limit clock of the GPU to 300 MHz at the second level, and set the minimum clock range of the limit clock of the GPU to 200 MHz at the third level. As the PID level increases, the PID controller 320 may lower the minimum clock of the limit clock of the GPU by decreasing the lower limit of the minimum clock range of the limit clock of the GPU and may limit the operating clock of the CPU by lowering the minimum clock of the limit clock of the GPU. That is, the PID controller 320 may limit the operating clocks of the CPU/GPU by lowering the limit clocks of the CPU/GPU as the PID level increases and may effectively limit the heat generation of the electronic device by limiting the operating clocks of the CPU/GPU.

According to an embodiment, the PID controller 320 may determine the minimum clock of the limit clock of the CPU based on an average operating clock of the CPU in the minimum clock range of the limit clock of the CPU corresponding to the PID level. Here, the average operating clock of the CPU may represent an average clock of the operating clock of the CPU over a certain time. The PID controller 320 may calculate a current operating clock of the CPU based on a current load of the CPU received from the monitoring unit 312. For example, the current load of the CPU may be calculated with a value obtained by multiplying a ratio of an operation time for a unit time by the current operating clock of the CPU. The PID controller 320 may calculate the average operating clock of the CPU with an average of the operating clocks of the CPU for a certain time before the current time. For example, the certain time may be 10 seconds but is not limited thereto.

According to an embodiment, the PID controller 320 may decrease the minimum clock of the limit clock of the CPU as the average operating clock of the CPU increases and may increase the minimum clock of the limit clock of the CPU as the average operating clock of the CPU decreases. When the average operating clock of the CPU increases, the PID controller 320 may effectively control the heat generation of the electronic device by strongly limiting the operating clock of the CPU by decreasing the minimum clock of the limit clock of the CPU. When the average operating clock of the CPU decreases, the PID controller 320 may prevent the operating clock of the CPU from being strongly limited by increasing the minimum clock of the limit clock of the CPU, thereby guaranteeing the performance of the CPU. That is, after the PID level of the electronic device is determined, the PID controller 320 may guarantee a certain portion of the performance of the CPU in addition to the heat generation of the electronic device by determining the minimum clock of the limit clock of the CPU, based on the average operating clock of the CPU.

Likewise, the PID controller 320 may decrease the minimum clock of the limit clock of the GPU as an average operating clock of a GPU increases and may increase the minimum clock of the limit clock of the GPU as the average operating clock of the GPU decreases. When the average operating clock of the GPU increases, the PID controller 320 may effectively control the heat generation of the electronic device by strongly limiting an operating clock of the GPU by decreasing the minimum clock of the limit clock of the GPU. When the GPU average operating clock decreases, the PID controller 320 may prevent the GPU operating clock from being strongly limited by increasing the minimum clock of the GPU limit clock, thereby guaranteeing the performance of the GPU.

According to an embodiment, the PID controller 320 may periodically change the PID level of the electronic device. For example, the PID controller 320 may re-determine the PID level of the electronic device every 10 seconds.

According to an embodiment, the PID controller 320 may change the PID level according to a change in the surface temperature of the electronic device. For example, the PID controller 320 may change the PID level of the electronic device when the surface temperature of the electronic device increases due to PID control and does not meet the temperature condition corresponding to the determined PID level of the electronic device. After the PID level of the electronic device is determined, the PID controller 320 may need to determine the limit clocks of the CPU/GPU to lower clocks than the minimum clock of the limit clocks of the CPU/GPU to control the heat generation of the electronic device. That is, because the PID controller 320 should set the limit clocks of the CPU/GPU as clocks that are greater than or equal to the minimum clock of the limit clocks of the CPU/GPU, when the minimum clock of the limit clocks of the CPU/GPU is set to be high because the determined PID level of the electronic device is low, the PID controller 320 may not effectively control the heat generation of the electronic device, but the surface temperature of the electronic device may increase. In this case, as the surface temperature of the electronic device increases, the PID controller 320 may change the PID level of the electronic device to a higher PID level than the existing PID level of the electronic device and may control the heat generation of the electronic device by setting the minimum clock of the limit clocks of the CPU/GPU to be lower than before.

According to another embodiment, when the occurrence of a new event in the electronic device is monitored by the monitoring unit 312 and when a PID level indicated by the new event is higher than the existing PID level of the electronic device, the PID controller 320 may change the PID level of the electronic device to the PID level indicated by the new event.

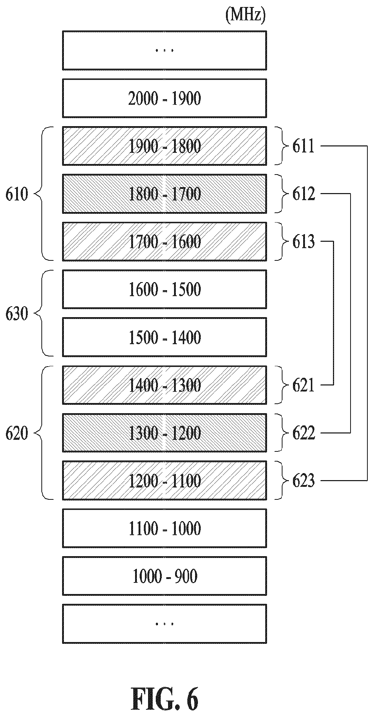

FIG. 6 is a diagram illustrating a process of determining the minimum clock of a limit clock of a CPU by a PID controller, according to an embodiment.

A PID controller (e.g., the PID controller 320 of FIG. 3) of an electronic device (e.g., the electronic device 101 of FIG. 1 or the electronic device 301 of FIG. 3) according to an embodiment may set a threshold clock range of a CPU to determine the minimum clock of a limit clock of the CPU for each PID level.

According to an embodiment, the PID controller may correspond the size of a threshold clock range 620 of the CPU corresponding to the PID level to the size of a minimum clock range 610 of the limit clock of the CPU set corresponding to a corresponding PID level. According to an embodiment, the PID controller may match the size of the minimum clock range 610 of the limit clock of the CPU corresponding to the PID level to the size of the threshold clock range 620 of the CPU corresponding to the corresponding PID level. For example, when the minimum clock range of the limit clock of the CPU is set from 1.6 GHz to 1.9 GHz at a first level, the PID controller may set the size of the threshold clock range of the CPU to 0.3 GHz, which is the size of the minimum clock range of the limit clock of the CPU.

According to an embodiment, the PID controller may set the threshold clock range of the CPU such that a lower limit of the minimum clock range of the limit clock of the CPU corresponding to the PID level is greater than an upper limit of the threshold clock range of the CPU corresponding to a corresponding PID level. According to an embodiment, the PID controller may set a difference 630 (hereinafter, referred to as a margin of the CPU) between the lower limit of the minimum clock range of the limit clock of the CPU corresponding to the PID level and the upper limit of the threshold clock range of the CPU corresponding to the corresponding PID level to have the same size at each PID level. For example, the PID controller may equally set the margin corresponding to each PID level to 0.2 GHz. According to another embodiment, the PID controller may set the margin corresponding to the PID level to be proportional to the size of the minimum clock range of the limit clock of the CPU corresponding to the corresponding PID level.

For example, as shown in FIG. 6, it may be assumed that the PID controller sets the minimum clock range 610 of the limit clock of the CPU from 1.6 GHz to 1.9 GHz at the first level and sets the margin corresponding to the first level to 0.2 GHz. In this case, the PID controller may set the upper limit of the threshold clock range 620 of the CPU corresponding to the first level to 1.4 GHz, which is obtained by subtracting 0.2 GHz, which is the margin 630, from 1.6 GHz, which is the lower limit of the minimum clock range of the limit clock of the CPU. In addition, when the size of the threshold clock range 620 of the CPU corresponding to the first level is set to be the same size as 0.3 GHz, which is the size of the minimum clock range 610 of the limit clock of the CPU at the first level, the PID controller may set the lower limit of the threshold clock range 620 of the CPU to 1.1 GHz, which is from 1.4 GHz to 0.3 GHz.

According to an embodiment, the PID controller may set the minimum clock of the limit clock of the CPU based on a section to which an average operating clock of the CPU belongs in the threshold clock range 620 of the CPU corresponding to the determined PID level of the electronic device. According to an embodiment, the PID controller may divide each of the minimum clock range 610 of the limit clock of the CPU and the threshold clock range 620 of the CPU corresponding to the PID level into the predetermined number of sections. That is, the PID controller may divide the minimum clock range of the limit clock of the CPU corresponding to the PID level and the threshold clock range of the CPU corresponding to the corresponding PID level into the same number of sections. For example, the predetermined number may be 3 but is not limited thereto. According to an embodiment, the number of sections into which the minimum clock range of the limit clock of the CPU corresponding to the PID level and the threshold clock range of the CPU are divided may be the same or different for each PID level.

According to an embodiment, the PID controller may map sections 611, 612, and 613 into which the minimum clock range 610 of the limit clock of the CPU corresponding to the PID level is divided to sections 621, 622, and 623 into which the threshold clock range 620 of the CPU corresponding to the corresponding PID level is divided. According to an embodiment, the PID controller may map, in the reverse order, the sections 611, 612, and 613 into which the minimum clock range 610 of the limit clock of the CPU corresponding to the PID level is divided to the sections 621, 622, and 623 into which the threshold clock range 620 of the CPU corresponding to the corresponding PID level is divided. For example, as shown in FIG. 6, it may be assumed that the minimum clock range 610 of the limit clock of the CPU corresponding to the first level is from 1.6 GHz to 1.9 GHz and the threshold clock range of the CPU corresponding to the first level is from 1.1 GHz to 1.4 GHz. The PID controller may divide the minimum clock range 610 of the limit clock of the CPU into a first minimum clock section 611 that is less than 1.9 GHz and greater than or equal to 1.8 GHz, a second minimum clock section 612 that is less than 1.8 GHz and greater than or equal to 1.7 GHz, and a third minimum clock section 613 that is less than 1.7 GHz and greater than or equal to 1.6 GHz. In addition, the PID controller may divide the threshold clock range 620 of the CPU into a first threshold clock section 621 that is less than 1.4 GHz and greater than or equal to 1.3 GHz, a second threshold clock section 622 that is less than 1.3 GHz and greater than or equal to 1.2 GHz, and a third threshold clock section 623 that is less than 1.2 GHz and greater than or equal to 1.1 GHz. In this case, the PID controller may map the first threshold clock section 621 to the third minimum clock section 613, map the second threshold clock section 622 to the second minimum clock section 612, and map the third threshold clock section 623 to the first minimum clock section 611.

According to an embodiment, the PID controller may set the minimum clock of the limit clock of the CPU as the upper limit of the section of the minimum clock range 610 of the limit clock of the CPU mapped to a section to which the average operating clock of the CPU belongs in the threshold clock range 620 of the CPU. For example, when the average operating clock of the CPU is less than 1.36 GHz and belongs to the first threshold clock section 621 in the threshold clock range 620 of the CPU, the PID controller may set the minimum clock of the limit clock of the CPU to 1.7 GHz, which is the upper limit of the third minimum clock section 613 mapped to the first threshold clock section 621. In another example, when the average operating clock of the CPU is 1.14 GHz and belongs to the third threshold clock section 623 in the threshold clock range 620 of the CPU, the PID controller may set the minimum clock of the limit clock of the CPU to 1.9 GHz, which is the upper limit of the first minimum clock section 611 mapped to the third threshold clock section 623.

Furthermore, when the average operating clock of the CPU is greater than or equal to the upper limit (e.g., 1.4 GHz) of the threshold clock range 620 of the CPU, the PID controller may set the minimum clock of the limit clock of the CPU as the lower limit (e.g., 1.6 GHz) of the minimum clock range of the limit clock of the CPU. When the average operating clock of the CPU is less than the lower limit (e.g., 1.0 GHz) of the threshold clock range 620 of the CPU, the PID controller may set the minimum clock of the limit clock of the CPU as the upper limit (e.g., 1.9 GHz) of the minimum clock range 610 of the limit clock of the CPU. That is, the PID controller may decrease the minimum clock of the limit clock of the CPU as the average operating clock of the CPU increases.

According to another embodiment, the PID controller may also set the minimum clock of the limit clock of the CPU as the lower limit of the section of the minimum clock range of the limit clock of the CPU mapped to a section to which the average operating clock of the CPU belongs in the threshold clock range of the CPU.

According to another embodiment, the PID controller may also set the minimum clock of the limit clock of the CPU based on the average operating clock of the CPU and the threshold clock range of the CPU without dividing the sections. For example, the PID controller may map, in the reverse order, clocks in the threshold clock range of the CPU to clocks in the minimum clock range of the limit clock of the CPU and may set the minimum clock of the limit clock of the CPU as the clock mapped to the average operating clock of the CPU in the CPU mapping result. In the example of FIG. 6, for example, a clock of 1.1 GHz may be mapped to a clock of 1.9 GHz, a clock of 1.2 GHz may be mapped to a clock of 1.8 GHz, and a clock of 1.3 GHz may be mapped to a clock of 1.7 GHz. That is, a clock of 1.1 GHz + $\alpha$ may be mapped to a clock of 1.9 GHz - $\alpha$. Here, when the average operating clock of the CPU is 1.15 GHz, the PID controller may set the minimum clock of the limit clock of the CPU to 1.85 GHz.

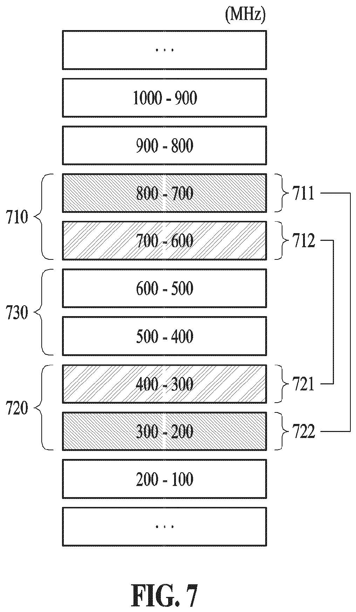

FIG. 7 is a diagram illustrating a process of determining the minimum clock of a limit clock of a GPU by a PID controller, according to an embodiment.

According to an embodiment, the PID controller may set the minimum clock of the limit clock of the GPU similarly to a method of setting the minimum clock of a limit clock of a CPU. The PID controller may set a threshold clock range of the GPU to determine the minimum clock of the limit clock of the GPU for each PID level.

The PID controller may correspond the size of a threshold clock range 720 of the GPU corresponding to a PID level to the size of a minimum clock range 710 of the limit clock of the GPU set corresponding to a corresponding PID level. For example, as shown in FIG. 7, when the minimum clock range 710 of the limit clock of the GPU is set from 600 MHz to 800 MHz at a first level, the PID controller may set the size of the threshold clock range 720 of the GPU to 200 MHz, which is the size of the minimum clock range of the limit clock of the GPU.

According to an embodiment, the PID controller may set the threshold clock range of the CPU such that a lower limit of the minimum clock range 710 of the limit clock of the GPU corresponding to the PID level is greater than an upper limit of the threshold clock range 720 of the CPU corresponding to a corresponding PID level. The PID controller may set a GPU margin 730, which is the difference between the lower limit of the minimum clock range of the limit clock of the GPU corresponding to the PID level and the upper limit of the threshold clock range of the GPU corresponding to the corresponding PID level, to have the same size at each PID level.

According to an embodiment, the PID controller may set the minimum clock of the limit clock of the GPU based on a section to which an average operating clock of the GPU belongs in the threshold clock range 720 of the GPU corresponding to the determined PID level of the electronic device. The PID controller may divide the minimum clock range 710 of the limit clock of the GPU corresponding to the PID level and the threshold clock range 720 of the GPU into the predetermined number of sections. That is, the PID controller may divide the minimum clock range of the limit clock of the GPU corresponding to the PID level and the threshold clock range of the GPU corresponding to the corresponding PID level into the same number of sections.

According to an embodiment, the PID controller may map sections 711, 712, and 713 into which the minimum clock range 710 of the limit clock of the GPU corresponding to the PID level is divided to sections 721, 722, and 723 into which the threshold clock range 720 of the GPU corresponding to the corresponding PID level is divided. The PID controller may map, in the reverse order, the sections 711, 712, and 713 into which the minimum clock range of the limit clock of the GPU corresponding to the PID level is divided to the sections 721, 722, and 723 into which the threshold clock range of the GPU corresponding to the corresponding PID level is divided. According to an embodiment, the PID controller may set the minimum clock of the limit clock of the GPU as the upper limit of the section of the minimum clock range of the limit clock of the GPU mapped to a section to which the average operating clock of the GPU belongs in the threshold clock range of the GPU.

For example, as shown in FIG. 7, the PID controller may divide the minimum clock range of the limit clock of the GPU corresponding to the first level into a first minimum clock section that is less than 700 MHz and greater than or equal to 600 MHz and a second minimum clock section that is less than 600 MHz and greater than or equal to 500 MHz. In addition, the PID controller may divide the threshold clock range of the GPU into a first threshold clock section that is less than 400 MHz and greater than or equal to 300 MHz and a second threshold clock section that is less than 300 MHz and greater than or equal to 200 MHz. In this case, the PID controller may map the first threshold clock section to the second minimum clock section and map the second threshold clock section to the first minimum clock section. When the average operating clock of the GPU is less than 300 MHz and less than 200 MHz and belongs to the first threshold clock section in the threshold clock range of the GPU, the PID controller may set the minimum clock of the limit clock of the GPU to 700 MHz, which is the upper limit of the second minimum clock section mapped to the first threshold clock section.

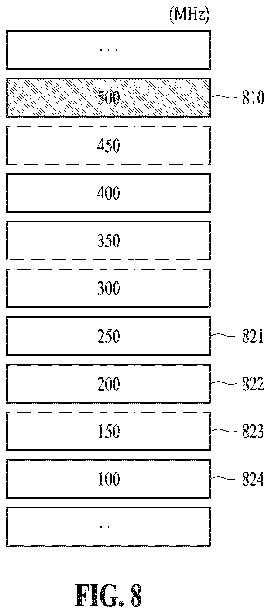

FIG. 8 is a diagram illustrating a process of determining the minimum speed of a TCP limit speed by a PID controller, according to an embodiment.

The PID controller according to an embodiment may set the minimum speed of the TCP limit speed. Since the TCP limit speed varies depending on a network state, the PID controller may set a virtual max speed of the TCP speed as a sufficiently high speed for PID control. Here, the virtual max speed may represent the maximum speed that may be set as the TCP limit speed. The PID controller may set the minimum speed of the TCP limit speed for each PID level. According to an embodiment, as the PID level increases, the PID controller may decrease the minimum speed of the TCP limit speed corresponding to the PID level. For example, the PID controller may set the minimum speed of the TCP limit speed corresponding to a first level as 250 mbps 821, set the minimum speed of the TCP limit speed corresponding to a second level as 200 mbps 822, set the minimum speed of the TCP limit speed corresponding to a third level as 150 mpbs 823, and set the minimum speed of the TCP limit speed corresponding to a fourth level as 100 mbps 824. The PID controller may limit the TCP speed more efficiently by decreasing the minimum speed of the TCP limit speed as the PID level increases. The PID controller may further control the heat generation of an electronic device by determining the TCP limit speed through PID control at the minimum speed of the TCP limit speed set in response to the determined PID level of the electronic device.

An electronic device according to an embodiment may include a memory in which instructions executable by a computer are stored and a processor configured to access the memory and execute the instructions, in which the processor may be configured to measure surface temperature of the electronic device, monitor a load of hardware and an occurrence of preset events, determine a PID level of the electronic device to control heat generation based on the surface temperature of the electronic device, set each of the minimum clock of a limit clock of a CPU and the minimum clock of a limit clock of a GPU, based on the determined PID level and the load of the hardware, and determine the limit clock of the CPU to be greater than or equal to the set minimum clock of the limit clock of the CPU and determine the limit clock of the GPU to be greater than or equal to the set minimum clock of the limit clock of the GPU such that the surface temperature of the electronic device converges to a target temperature corresponding to the determined PID level.

When an occurrence of at least one event of the preset events is monitored, the processor may be configured to determine the PID level of the electronic device to be the highest PID level among a PID level indicated by the at least one occurred event and a PID level corresponding to the surface temperature of the electronic device.

The processor may be configured to set a target temperature corresponding to a PID level for each PID level, the minimum clock range of a limit clock of a CPU, and the minimum clock range of a limit clock of a GPU, and as a PID level increases, increase a target temperature corresponding to a PID level, decrease a lower limit of the minimum clock range of the limit clock of the CPU, and decrease a lower limit of the minimum clock range of the limit clock of the GPU.

The processor may be configured to determine the minimum clock of the limit clock of the CPU based on an average operating clock of the CPU in the minimum clock range of a limit clock of a CPU corresponding to the determined PID level and determine the minimum clock of the limit clock of the GPU based on an average operating clock of the GPU in the minimum clock range of a limit clock of a GPU corresponding to the determined PID level.

The processor may be configured to decrease the minimum clock of the limit clock of the CPU as the average operating clock of the CPU increases and decrease the minimum clock of the limit clock of the GPU as the average operating clock of the GPU increases.

The processor may be configured to set a CPU threshold clock range to determine the minimum clock of a limit clock of a CPU and a GPU threshold clock range to determine the minimum clock of a limit clock of a GPU, for each PID level, and match a size of a CPU threshold clock range corresponding to a PID level to a size of the minimum clock range of a limit clock of a CPU corresponding to a corresponding PID level and match a size of a GPU threshold clock range corresponding to the corresponding PID level to a size of the minimum clock range of a limit clock of a GPU corresponding to the corresponding PID level.

The processor may be configured to set the CPU threshold clock range such that a lower limit of the minimum clock range of a limit clock of a CPU corresponding to a PID level is greater than an upper limit of a CPU threshold clock range corresponding to a corresponding PID level and set the GPU threshold clock range such that a lower limit of the minimum clock range of a limit clock of a GPU corresponding to a PID level is greater than an upper limit of a GPU threshold clock range corresponding to a corresponding PID level.

The processor may be configured to divide each of the minimum clock range of a limit clock of a CPU corresponding to a PID level and a CPU threshold clock range into a first number of sections and map, in a reverse order, sections into which the minimum clock range of a limit clock of a CPU is divided to sections into which a CPU threshold clock range is divided, and divide each of the minimum clock range of a limit clock of a GPU corresponding to a PID level and a GPU threshold clock range into a second number of sections and map, in a reverse order, sections into which the minimum clock range of a limit clock of a GPU is divided to sections into which a GPU threshold clock range is divided.

The processor may be configured to set the minimum clock of the limit clock of the CPU as an upper limit of a section of the minimum clock range of a limit clock of a CPU mapped to a section to which an average operating clock of the CPU belongs, in a CPU threshold clock range corresponding to the determined PID level, and set the minimum clock of the limit clock of the GPU as an upper limit of a section of the minimum clock range of a limit clock of a GPU mapped to a section to which an average operating clock of the GPU belongs, in a GPU threshold clock range corresponding to the determined PID level.

The processor may be configured to set a virtual max speed, which is the maximum speed capable of being set as a TCP limit speed and set a TCP limit speed for each PID level in the set virtual max speed, and decrease the minimum speed of a TCP limit speed corresponding to a PID level as a PID level increases.

A method performed by a processor may include measuring a surface temperature of an electronic device and monitoring a load of hardware and an occurrence of preset events, determining a PID level of the electronic device to control heat generation based on the surface temperature of the electronic device, setting each of the minimum clock of a limit clock of a CPU and the minimum clock of a limit clock of a GPU, based on the determined PID level and the load of the hardware, and determining the limit clock of the CPU and the limit clock of the GPU such that the surface temperature of the electronic device converges to a target temperature corresponding to the determined PID level.

The determining of the PID level of the electronic device may include, when an occurrence of at least one event among the preset events is monitored, determining the PID level of the electronic device for each highest PID level among a PID level indicated by the at least one event that occurred and a PID level corresponding to the surface temperature of the electronic device.

The setting of each of the minimum clock of the limit clock of the CPU and the minimum clock of the limit clock of the GPU may include setting target temperature corresponding to a PID level for each PID level, the minimum clock range of a limit clock of a CPU, and the minimum clock range of a limit clock of a GPU, and as a PID level increases, increasing a target temperature corresponding to a PID level, decreasing a lower limit of the minimum clock range of the limit clock of the CPU, and decreasing a lower limit of the minimum clock range of the limit clock of the GPU.

The setting of each of the minimum clock of the limit clock of the CPU and the minimum clock of the limit clock of the GPU may include determining the minimum clock of the limit clock of the CPU based on an average operating clock of the CPU in the minimum clock range of a limit clock of a CPU corresponding to the determined PID level and determining the minimum clock of the limit clock of the GPU based on an average operating clock of the GPU in the minimum clock range of a limit clock of a GPU corresponding to the determined PID level.

The setting of each of the minimum clock of the limit clock of the CPU and the minimum clock of the limit clock of the GPU may include decreasing the minimum clock of the limit clock of the CPU as the average operating clock of the CPU increases and decreasing the minimum clock of the limit clock of the CPU as the average operating clock of the GPU increases.

The setting of each of the minimum clock of the limit clock of the CPU and the minimum clock of the limit clock of the GPU may include setting a CPU threshold clock range to determine the minimum clock of a limit clock of a CPU and a GPU threshold clock range to determine the minimum clock of a limit clock of a GPU, for each PID level, in which the setting of the CPU threshold clock range and the GPU threshold clock range may include matching a size of a CPU threshold clock range corresponding to a PID level to a size of the minimum clock range of a limit clock of a CPU corresponding to a corresponding PID level and matching a size of a GPU threshold clock range corresponding to the corresponding PID level to a size of the minimum clock range of a limit clock of a GPU corresponding to the corresponding PID level.

The setting of the CPU threshold clock range and the GPU threshold clock range may include setting the CPU threshold clock range such that a lower limit of the minimum clock range of a limit clock of a CPU corresponding to a PID level is greater than an upper limit of a CPU threshold clock range corresponding to a corresponding PID level and setting the GPU threshold clock range such that a lower limit of the minimum clock range of a limit clock of a GPU corresponding to a PID level is greater than an upper limit of a GPU threshold clock range corresponding to a corresponding PID level.

The setting of each of the minimum clock of the limit clock of the CPU and the minimum clock of the limit clock of the GPU may include dividing each of the minimum clock range of a limit clock of a CPU corresponding to a PID level and a CPU threshold clock range into a first number of sections and map, in a reverse order, sections into which the minimum clock range of a limit clock of a CPU is divided to sections into which a CPU threshold clock range is divided, and dividing each of the minimum clock range of a limit clock of a GPU corresponding to a PID level and a GPU threshold clock range into a second number of sections and map, in a reverse order, sections into which the minimum clock range of a limit clock of a GPU is divided to sections into which a GPU threshold clock range is divided.

The setting of each of the minimum clock of the limit clock of the CPU and the minimum clock of the limit clock of the GPU may include setting the minimum clock of the limit clock of the CPU as an upper limit of a section of the minimum clock range of a limit clock of a CPU mapped to a section to which an average operating clock of the CPU belongs, in a CPU threshold clock range corresponding to the determined PID level, and setting the minimum clock of the limit clock of the GPU as an upper limit of a section of the minimum clock range of a limit clock of a GPU mapped to a section to which an average operating clock of the GPU belongs, in a GPU threshold clock range corresponding to the determined PID level.

A method performed by a processor according to an embodiment may include setting a virtual max speed, which is a maximum speed capable of being set as a TCP limit speed, and setting a TCP limit speed for each PID level in the set virtual max speed, and decreasing the minimum speed of a TCP limit speed corresponding to a PID level as a PID level increases.

The embodiments described herein may be implemented using a hardware component, a software component, and/or a combination thereof. A processing device may be implemented using one or more general-purpose or special-purpose computers, such as, for example, a processor, a controller, an arithmetic logic unit (ALU), a digital signal processor (DSP), a microcomputer, a field programmable gate array (FPGA), a programmable logic unit (PLU), a microprocessor or any other device capable of responding to and executing instructions in a defined manner. The processing device may run an operating system (OS) and one or more software applications that run on the OS. The processing device also may access, store, manipulate, process, and create data in response to execution of the software. For purpose of simplicity, the description of a processing device is used as singular; however, one skilled in the art will appreciate that a processing device may include multiple processing elements and/or multiple types of processing elements. For example, the processing device may include a plurality of processors, or a single processor and a single controller. In addition, different processing configurations are possible, such as parallel processors.

The software may include a computer program, a piece of code, an instruction, or some combination thereof, to independently or uniformly instruct or configure the processing device to operate as desired. Software and data may be embodied permanently or temporarily in any type of machine, component, physical or virtual equipment, computer storage medium or device, or in a propagated signal wave capable of providing instructions or data to or being interpreted by the processing device. The software also may be distributed over network-coupled computer systems so that the software is stored and executed in a distributed fashion. The software and data may be stored by one or more non-transitory computer-readable recording mediums.

The methods according to the above-described embodiments may be recorded in non-transitory computer-readable media including program instructions to implement various operations of the above-described embodiments. The media may also include, alone or in combination with the program instructions, data files, data structures, and the like. The program instructions recorded on the media may be those specially designed and constructed for the purposes of embodiments, or they may be of the kind well-known and available to those having skill in the computer software arts. Examples of non-transitory computer-readable media include magnetic media such as hard disks, floppy disks, and magnetic tape; optical media such as CD-ROM discs and/or DVDs; magneto-optical media such as optical discs; and hardware devices that are specially configured to store and perform program instructions, such as read-only memory (ROM), random access memory (RAM), flash memory, and the like. Examples of program instructions include both machine code, such as produced by a compiler, and files containing higher-level code that may be executed by the computer using an interpreter.

The above-described hardware devices may be configured to act as one or more software modules in order to perform the operations of the above-described embodiments, or vice versa.

As described above, although the embodiments have been described with reference to the limited drawings, a person skilled in the art may apply various technical modifications and variations based thereon. For example, suitable results may be achieved if the described techniques are performed in a different order, and/or if components in a described system, architecture, device, or circuit are combined in a different manner, or replaced or supplemented by other components or their equivalents.

Accordingly, other implementations are within the scope of the following claims.

## Claims

1. An electronic device (101) comprising:

    a memory (130) in which instructions executable by a computer are stored;
    a processor (120) configured to access the memory and execute the instructions,
    wherein the processor (120) is configured to measure surface temperature of the electronic device, monitor a load of hardware and an occurrence of preset events, determine a proportional-integral-differential (PID) level of the electronic device to control heat generation based on the surface temperature of the electronic device, set each of a minimum clock of a limit clock of a central processing unit (CPU) and a minimum clock of a limit clock of a graphics processing unit (GPU), based on the determined PID level and the load of the hardware, and determine the limit clock of the CPU to be greater than or equal to the set minimum clock of the limit clock of the CPU and determine the limit clock of the GPU to be greater than or equal to the set minimum clock of the limit clock of the GPU such that the surface temperature of the electronic device converges to a target temperature corresponding to the determined PID level; and
    wherein the processor (120) is configured to:

    set a target temperature corresponding to a PID level for each PID level, a minimum clock range of a limit clock of a CPU, and a minimum clock range of a limit clock of a GPU; and
    as a PID level increases, increase a target temperature corresponding to a PID level, decrease a lower limit of the minimum clock range of the limit clock of the CPU, and decrease a lower limit of the minimum clock range of the limit clock of the GPU.

2. The electronic device of claim 1, wherein, when an occurrence of at least one event of the preset events is monitored, the processor (120) is configured to determine the PID level of the electronic device to be a highest PID level among a PID level indicated by the at least one event that occurred and a PID level corresponding to the surface temperature of the electronic device.

3. The electronic device of claim 1, wherein the processor (120) is configured to:

    determine the minimum clock of the limit clock of the CPU based on an average operating clock of the CPU in a minimum clock range of a limit clock of a CPU corresponding to the determined PID level; and

determine the minimum clock of the limit clock of the GPU based on an average operating clock of the GPU in a minimum clock range of a limit clock of a GPU corresponding to the determined PID level.

4. The electronic device of claim 3, wherein the processor (120) is configured to:

decrease the minimum clock of the limit clock of the CPU as the average operating clock of the CPU increases;
decrease the minimum clock of the limit clock of the GPU as the average operating clock of the GPU increases.

5. The electronic device of claim 1, wherein the processor (120) is configured to:

set a CPU threshold clock range to determine a minimum clock of a limit clock of a CPU and a GPU threshold clock range to determine a minimum clock of a limit clock of a GPU, for each PID level;
match a size of a CPU threshold clock range corresponding to a PID level to a size of a minimum clock range of a limit clock of a CPU corresponding to a corresponding PID level and match a size of a GPU threshold clock range corresponding to the corresponding PID level to a size of a minimum clock range of a limit clock of a GPU corresponding to the corresponding PID level.

6. The electronic device of claim 5, wherein the processor (120) is configured to:

set the CPU threshold clock range such that a lower limit of a minimum clock range of a limit clock of a CPU corresponding to a PID level is greater than an upper limit of a CPU threshold clock range corresponding to a corresponding PID level;
set the GPU threshold clock range such that a lower limit of a minimum clock range of a limit clock of a GPU corresponding to a PID level is greater than an upper limit of a GPU threshold clock range corresponding to a corresponding PID level.

7. The electronic device of claim 1, wherein the processor (120) is configured to:

divide each of a minimum clock range of a limit clock of a CPU and a CPU threshold clock range corresponding to a PID level into a first number of sections and map, in a reverse order, sections into which a minimum clock range of a limit clock of a CPU is divided to sections into which a CPU threshold clock range is divided;
divide each of a minimum clock range of a limit clock of a GPU corresponding to a PID level and a GPU threshold clock range into a second number of sections and map, in a reverse order, sections into which a minimum clock range of a limit clock of a GPU is divided to sections into which a GPU threshold clock range is divided.

8. The electronic device of claim 7, wherein the processor (120) is configured to:

set the minimum clock of the limit clock of the CPU as an upper limit of a section of a minimum clock range of a limit clock of a CPU mapped to a section to which an average operating clock of the CPU belongs, in a CPU threshold clock range corresponding to the determined PID level;
set the minimum clock of the limit clock of the GPU as an upper limit of a section of a minimum clock range of a limit clock of a GPU mapped to a section to which an average operating clock of the GPU belongs, in a GPU threshold clock range corresponding to the determined PID level.

9. The electronic device of claim 1, wherein the processor (120) is configured to:

set a virtual max speed, which is a maximum speed capable of being set as a transmission control protocol (TCP) limit speed, and set a TCP limit speed for each PID level in the set virtual max speed;
decrease a minimum speed of a TCP limit speed corresponding to a PID level as a PID level increases.

10. A method performed by a processor, the method comprising:

measuring a surface temperature of an electronic device and monitoring a load of hardware and an occurrence of preset events;
determining a proportional-integral-differential (PID) level of the electronic device to control heat generation based on the surface temperature of the electronic device;
setting each of a minimum clock of a limit clock of a central processing unit (CPU) and a minimum clock of a limit clock of a graphics processing unit (GPU), based on the determined PID level and the load of the hardware; and

determining the limit clock of the CPU to be greater than or equal to the set minimum clock of the limit clock of the CPU and determining the limit clock of the GPU to be greater than or equal to the set minimum clock of the limit clock of the GPU such that the surface temperature of the electronic device converges to a target temperature corresponding to the determined PID level;

wherein the setting of each of the minimum clock of the limit clock of the CPU and the minimum clock of the limit clock of the GPU comprises:

setting a target temperature corresponding to a PID level for each PID level, a minimum clock range of a limit clock of a CPU, and a minimum clock range of a limit clock of a GPU; and

as a PID level increases, increasing a target temperature corresponding to a PID level, decreasing a lower limit of the minimum clock range of the limit clock of the CPU, and decreasing a lower limit of the minimum clock range of the limit clock of the GPU.

11. The method of claim 10, wherein the setting of each of the minimum clock of the limit clock of the CPU and the minimum clock of the limit clock of the GPU comprises:

determining the minimum clock of the limit clock of the CPU based on an average operating clock of the CPU in a minimum clock range of a limit clock of a CPU corresponding to the determined PID level; and

determining the minimum clock of the limit clock of the GPU based on an average operating clock of the GPU in a minimum clock range of a limit clock of a GPU corresponding to the determined PID level.

12. The method of claim 10, wherein the setting of each of the minimum clock of the limit clock of the CPU and the minimum clock of the limit clock of the GPU comprises setting a CPU threshold clock range to determine a minimum clock of a limit clock of a CPU and a GPU threshold clock range to determine a minimum clock of a limit clock of a GPU, for each PID level,

wherein the setting of the CPU threshold clock range and the GPU threshold clock range comprises:

matching a size of a CPU threshold clock range corresponding to a PID level to a size of a minimum clock range of a limit clock of a CPU corresponding to a corresponding PID level and matching a size of a GPU threshold clock range corresponding to the corresponding PID level to a size of a minimum clock range of a limit clock of a GPU corresponding to the corresponding PID level;

setting the CPU threshold clock range such that a lower limit of a minimum clock range of a limit clock of a CPU corresponding to a PID level is greater than an upper limit of a CPU threshold clock range corresponding to a corresponding PID level; and

setting the GPU threshold clock range such that a lower limit of a minimum clock range of a limit clock of a GPU corresponding to a PID level is greater than an upper limit of a GPU threshold clock range corresponding to a corresponding PID level.

13. A non-transitory computer-readable storage medium storing instructions that, when executed by a processor, cause the processor to perform the method of claim 10.

**Patentansprüche**

1. Elektronische Vorrichtung (101), umfassend:

einen Speicher (130), in dem Anweisungen, die durch einen Computer ausführbar sind, gespeichert sind;
einen Prozessor (120), der dazu konfiguriert ist, auf den Speicher zuzugreifen und die Anweisungen auszuführen,
wobei der Prozessor (120) dazu konfiguriert ist, Oberflächentemperatur der elektronischen Vorrichtung zu messen, eine Last von Hardware und ein Auftreten von voreingestellten Ereignissen zu überwachen, ein Proportional-Integral-Differential(PID-)Niveau der elektronischen Vorrichtung zu bestimmen, um Wärmeerzeugung basierend auf der Oberflächentemperatur der elektronischen Vorrichtung zu regeln, jedes von einem Mindesttakt eines Grenztakts einer zentralen Verarbeitungseinheit (CPU) und einem Mindesttakt eines Grenztakts einer Grafikverarbeitungseinheit (GPU) basierend auf dem bestimmten PID-Niveau und der Last der Hardware einzustellen, und zu bestimmen, dass der Grenztakt der CPU größer als der oder gleich dem eingestellten Mindesttakt des Grenztakts der CPU ist und zu bestimmen, dass der Grenztakt der GPU größer als der oder gleich dem eingestellten Mindesttakt des Grenztakts der GPU ist, sodass die Oberflächentemperatur der elektronischen Vorrichtung zu einer Zieltemperatur entsprechend dem bestimmten PID-Niveau konvergiert; und

wobei der Prozessor (120) zu Folgendem konfiguriert ist:

Einstellen einer Zieltemperatur entsprechend einem PID-Niveau für jedes PID-Niveau, einem Mindesttaktbereich eines Grenztakts einer CPU und einem Mindesttaktbereich eines Grenztakts einer GPU; und wenn sich ein PID-Niveau erhöht, Erhöhen einer Zieltemperatur entsprechend einem PID-Niveau, Verringern einer Untergrenze des Mindesttaktbereichs des Grenztakts der CPU und Verringern einer Untergrenze des Mindesttaktbereichs des Grenztakts der GPU.

2. Elektronische Vorrichtung nach Anspruch 1, wobei, wenn ein Auftreten von zumindest einem Ereignis der voreingestellten Ereignisse überwacht wird, der Prozessor (120) dazu konfiguriert ist, zu bestimmen, dass das PID-Niveau der elektronischen Vorrichtung ein höchstes PID-Niveau aus einem PID-Niveau, das durch das zumindest eine Ereignis, das aufgetreten ist, angegeben ist, und einem PID-Niveau entsprechend der Oberflächentemperatur der elektronischen Vorrichtung ist.

3. Elektronische Vorrichtung nach Anspruch 1, wobei der Prozessor (120) zu Folgendem konfiguriert ist:

Bestimmen des Mindesttakts des Grenztakts der CPU basierend auf einem durchschnittlichen Betriebstakt der CPU in einem Mindesttaktbereich eines Grenztakts einer CPU entsprechend dem bestimmten PID-Niveau; und Bestimmen des Mindesttakts des Grenztakts der GPU basierend auf einem durchschnittlichen Betriebstakt der GPU in einem Mindesttaktbereich eines Grenztakts einer GPU entsprechend dem bestimmten PID-Niveau.

4. Elektronische Vorrichtung nach Anspruch 3, wobei der Prozessor (120) zu Folgendem konfiguriert ist:

Verringern des Mindesttakts des Grenztakts der CPU, wenn sich der durchschnittliche Betriebstakt der CPU erhöht;
Verringern des Mindesttakts des Grenztakts der GPU, wenn sich der durchschnittliche Betriebstakt der GPU erhöht.

5. Elektronische Vorrichtung nach Anspruch 1, wobei der Prozessor (120) zu Folgendem konfiguriert ist:

Einstellen eines CPU-Schwellentaktbereichs, um einen Mindesttakt eines Grenztakts einer CPU zu bestimmen, und eines GPU-Schwellentaktbereichs, um einen Mindesttakt eines Grenztakts einer GPU zu bestimmen, für jedes PID-Niveau;
Anpassen einer Größe eines CPU-Schwellentaktbereichs entsprechend einem PID-Niveau an eine Größe eines Mindesttaktbereichs eines Grenztakts einer CPU entsprechend einem entsprechenden PID-Niveau und Anpassen einer Größe eines GPU-Schwellentaktbereichs entsprechend dem entsprechenden PID-Niveau an eine Größe eines Mindesttaktbereichs eines Grenztakts einer GPU entsprechend dem entsprechenden PID-Niveau.

6. Elektronische Vorrichtung nach Anspruch 5, wobei der Prozessor (120) zu Folgendem konfiguriert ist:

Einstellen des CPU-Schwellentaktbereichs, sodass eine Untergrenze eines Mindesttaktbereichs eines Grenztakts einer CPU entsprechend einem PID-Niveau größer als eine Obergrenze eines CPU-Schwellentaktbereichs entsprechend einem entsprechenden PID-Niveau ist;
Einstellen des GPU-Schwellentaktbereichs, sodass eine Untergrenze eines Mindesttaktbereichs eines Grenztakts einer GPU entsprechend einem PID-Niveau größer als eine Obergrenze eines GPU-Schwellentaktbereichs entsprechend einem entsprechenden PID-Niveau ist.

7. Elektronische Vorrichtung nach Anspruch 1, wobei der Prozessor (120) zu Folgendem konfiguriert ist:

Unterteilen von jedem von einem Mindesttaktbereich eines Grenztakts einer CPU und einem CPU-Schwellentaktbereich entsprechend einem PID-Niveau in eine erste Anzahl an Abschnitten und Zuordnen, in umgekehrter Reihenfolge, von Abschnitten, in die ein Mindesttaktbereich eines Grenztakts einer CPU unterteilt ist, zu Abschnitten, in die ein CPU-Schwellentaktbereich unterteilt ist;
Unterteilen von jedem von einem Mindesttaktbereich eines Grenztakts einer GPU entsprechend einem PID-Niveau und einem GPU-Schwellentaktbereich in eine zweite Anzahl an Abschnitten und Zuordnen, in einer umgekehrten Reihenfolge, von Abschnitten, in die ein Mindesttaktbereich eines Grenztakts einer GPU unterteilt ist, zu Abschnitten, in die ein GPU-Schwellentaktbereich unterteilt ist.

8. Elektronische Vorrichtung nach Anspruch 7, wobei der Prozessor (120) zu Folgendem konfiguriert ist:

Einstellen des Mindesttakts des Grenztakts der CPU als eine Obergrenze eines Abschnittes eines Mindesttaktbereichs eines Grenztakts einer CPU, der einem Abschnitt zugeordnet ist, zu dem ein durchschnittlicher Arbeitstakt der CPU gehört, in einem CPU-Schwellenwerttaktbereich entsprechend dem bestimmten PID-Niveau;
Einstellen des Mindesttakts des Grenztakts der GPU als eine Obergrenze eines Abschnittes eines Mindesttaktbereichs eines Grenztakts einer GPU, der einem Abschnitt zugeordnet ist, zu dem ein durchschnittlicher Arbeitstakt der GPU gehört, in einem GPU-Schwellentaktbereich entsprechend dem bestimmten PID-Niveau.

9. Elektronische Vorrichtung nach Anspruch 1, wobei der Prozessor (120) zu Folgendem konfiguriert ist:

Einstellen einer virtuellen max. Geschwindigkeit, die eine maximale Geschwindigkeit ist, die als Übertragungsregelprotokoll(TCP-)Grenzgeschwindigkeit eingestellt werden kann, und Einstellen einer TCP-Grenzgeschwindigkeit für jedes PID-Niveau in der eingestellten virtuellen max. Geschwindigkeit;
Verringern eine Mindestgeschwindigkeit einer TCP-Grenzgeschwindigkeit entsprechend einem PID-Niveau, wenn sich ein PID-Niveau erhöht.

10. Verfahren, durchgeführt durch einen Prozessor, wobei das Verfahren Folgendes umfasst:

Messen einer Oberflächentemperatur einer elektronischen Vorrichtung und Überwachen einer Last von Hardware und eines Auftretens von voreingestellten Ereignissen;
Bestimmen eines Proportional-Integral-Differential(PID-)Niveaus der elektronischen Vorrichtung, um Wärmeerzeugung basierend auf der Oberflächentemperatur der elektronischen Vorrichtung zu regeln;
Einstellen von jedem von einem Mindesttakt eines Grenztakts einer zentralen Verarbeitungseinheit (CPU) und einem Mindesttakt eines Grenztakts einer Grafikverarbeitungseinheit (GPU) basierend auf dem bestimmten PID-Niveau und der Last der Hardware; und
Bestimmen, dass der Grenztakt der CPU größer als der oder gleich dem eingestellten Mindesttakt des Grenztakts der CPU ist, und Bestimmen, dass der Grenztakt der GPU größer als der oder gleich dem eingestellten Mindesttakt des Grenztakts der GPU ist, sodass die Oberflächentemperatur der elektronischen Vorrichtung zu einer Zieltemperatur entsprechend dem bestimmten PID-Niveau konvergiert;
wobei das Einstellen von jedem von dem Mindesttakt des Grenztakts der CPU und dem Mindesttakt des Grenztakts der GPU Folgendes umfasst:

Einstellen einer Zieltemperatur entsprechend einem PID-Niveau für jedes PID-Niveau, einem Mindesttaktbereich eines Grenztakts einer CPU und einem Mindesttaktbereich eines Grenztakts einer GPU; und wenn sich ein PID-Niveau erhöht, Erhöhen einer Zieltemperatur entsprechend einem PID-Niveau, Verringern einer Untergrenze des Mindesttaktbereichs des Grenztakts der CPU und Verringern einer Untergrenze des Mindesttaktbereichs des Grenztakts der GPU.

11. Verfahren nach Anspruch 10, wobei das Einstellen von jedem von dem Mindesttakt des Grenztakts der CPU und dem Mindesttakt des Grenztakts der GPU Folgendes umfasst:

Bestimmen des Mindesttakts des Grenztakts der CPU basierend auf einem durchschnittlichen Betriebstakt der CPU in einem Mindesttaktbereich eines Grenztakts einer CPU entsprechend dem bestimmten PID-Niveau; und
Bestimmen des Mindesttakts des Grenztakts der GPU basierend auf einem durchschnittlichen Betriebstakt der GPU in einem Mindesttaktbereich eines Grenztakts einer GPU entsprechend dem bestimmten PID-Niveau.

12. Verfahren nach Anspruch 10, wobei das Einstellen von jedem von dem Mindesttakt des Grenztakts der CPU und dem Mindesttakt des Grenztakts der GPU Einstellen eines CPU-Schwellentaktbereichs, um einen Mindesttakt eines Grenztakts einer CPU zu bestimmen, und eines GPU-Schwellentaktbereichs, um einen Mindesttakt eines Grenztakts einer GPU zu bestimmen, für jedes PID-Niveau umfasst,
wobei das Einstellen des CPU-Schwellentaktbereichs und des GPU-Schwellentaktbereichs Folgendes umfasst:

Anpassen einer Größe eines CPU-Schwellentaktbereichs entsprechend einem PID-Niveau an eine Größe eines Mindesttaktbereichs eines Grenztakts einer CPU entsprechend einem entsprechenden PID-Niveau und Anpassen einer Größe eines GPU-Schwellentaktbereichs entsprechend dem entsprechenden PID-Niveau an eine Größe eines Mindesttaktbereichs eines Grenztakts einer GPU entsprechend dem entsprechenden PID-Niveau;

Einstellen des CPU-Schwellentaktbereichs, sodass eine Untergrenze eines Mindesttaktbereichs eines Grenztakts einer CPU entsprechend einem PID-Niveau größer als eine Obergrenze eines CPU-Schwellentaktbereichs entsprechend einem entsprechenden PID-Niveau ist; und

Einstellen des GPU-Schwellentaktbereichs, sodass eine Untergrenze eines Mindesttaktbereichs eines Grenztakts einer GPU entsprechend einem PID-Niveau größer als eine Obergrenze eines GPU-Schwellentaktbereichs entsprechend einem entsprechenden PID-Niveau ist.

13. Nichtflüchtiges computerlesbares Speichermedium, das Anweisungen speichert, die, wenn durch einen Prozessor ausgeführt, verursachen, dass der Prozessor das Verfahren nach Anspruch 10 durchführt.

**Revendications**

1. Dispositif électronique (101) comprenant :

une mémoire (130) dans laquelle sont stockées des instructions exécutables par un ordinateur ;

un processeur (120) configuré pour accéder à la mémoire et exécuter les instructions,

dans lequel le processeur (120) est configuré pour mesurer la température de surface du dispositif électronique, surveiller une charge de matériel et une occurrence d'événements prédéfinis, déterminer un niveau proportionnel-intégral-différentiel (PID) du dispositif électronique afin de maîtriser la génération de chaleur sur la base de la température de surface du dispositif électronique, définir chacune d'une horloge minimale d'une horloge limite d'une unité de traitement centrale (CPU) et d'une horloge minimale d'une horloge limite d'une unité de traitement graphique (GPU), sur la base du niveau PID déterminé et de la charge de matériel, et déterminer l'horloge limite de la CPU pour qu'elle soit supérieure ou égale à l'horloge minimale définie de l'horloge limite de la CPU et déterminer l'horloge limite de la GPU pour qu'elle soit supérieure ou égale à l'horloge minimale définie de l'horloge limite de la GPU de sorte que la température de surface du dispositif électronique converge vers une température cible correspondant au niveau PID déterminé ; et

dans lequel le processeur (120) est configuré pour :

définir une température cible correspondant à un niveau PID pour chaque niveau PID, une plage d'horloge minimale d'une horloge limite d'une CPU, et une plage d'horloge minimale d'une horloge limite d'une GPU ; et

lorsqu'un niveau PID augmente, augmenter une température cible correspondant à un niveau PID, diminuer une limite inférieure de la plage d'horloge minimale de l'horloge limite de la CPU, et diminuer une limite inférieure de la plage d'horloge minimale de l'horloge limite de la GPU.

2. Dispositif électronique selon la revendication 1, dans lequel, lorsqu'une occurrence d'au moins un événement des événements prédéfinis est surveillée, le processeur (120) est configuré pour déterminer le niveau PID du dispositif électronique comme étant un niveau PID le plus élevé parmi un niveau PID indiqué par l'au moins un événement qui s'est produit et un niveau PID correspondant à la température de surface du dispositif électronique.

3. Dispositif électronique selon la revendication 1, dans lequel le processeur (120) est configuré pour :

déterminer l'horloge minimale de l'horloge limite de la CPU sur la base d'une horloge système moyenne de la CPU dans une plage d'horloge minimale d'une horloge limite d'une CPU correspondant au niveau PID déterminé ; et

déterminer l'horloge minimale de l'horloge limite de la GPU sur la base d'une horloge système moyenne de la GPU dans une plage d'horloge minimale d'une horloge limite d'une GPU correspondant au niveau PID déterminé.

4. Dispositif électronique selon la revendication 3, dans lequel le processeur (120) est configuré pour :

diminuer l'horloge minimale de l'horloge limite de la CPU à mesure que l'horloge système moyenne de la CPU augmente ;

diminuer l'horloge minimale de l'horloge limite de la GPU à mesure que l'horloge système moyenne de la GPU augmente.

**5.** Dispositif électronique selon la revendication 1, dans lequel le processeur (120) est configuré pour :

définir une plage d'horloge seuil de CPU pour déterminer une horloge minimale d'une horloge limite d'une CPU et une plage d'horloge seuil de GPU pour déterminer une horloge minimale d'une horloge limite d'une GPU, pour chaque niveau PID ;
faire correspondre une taille d'une plage d'horloge seuil de CPU correspondant à un niveau PID à une taille d'une plage d'horloge minimale d'une horloge limite d'une CPU correspondant à un niveau PID correspondant et faire correspondre une taille d'une plage d'horloge seuil de GPU correspondant au niveau PID correspondant à une taille d'une plage d'horloge minimale d'une horloge limite d'une GPU correspondant au niveau PID correspondant.

**6.** Dispositif électronique selon la revendication 5, dans lequel le processeur (120) est configuré pour :

définir la plage d'horloge seuil de CPU de telle sorte qu'une limite inférieure d'une plage d'horloge minimale d'une horloge limite d'une CPU correspondant à un niveau PID soit supérieure à une limite supérieure d'une plage d'horloge seuil de CPU correspondant à un niveau PID correspondant ;
définir la plage d'horloge seuil de GPU de telle sorte qu'une limite inférieure d'une plage d'horloge minimale d'une horloge limite d'une GPU correspondant à un niveau PID soit supérieure à une limite supérieure d'une plage d'horloge seuil de GPU correspondant à un niveau PID correspondant.

**7.** Dispositif électronique selon la revendication 1, dans lequel le processeur (120) est configuré pour :

diviser chacune d'une plage d'horloge minimale d'une horloge limite d'une CPU et d'une plage d'horloge seuil de CPU correspondant à un niveau PID en un premier nombre de sections et mapper, dans un ordre inverse, les sections dans lesquelles une plage d'horloge minimale d'une horloge limite d'une CPU est divisée en sections dans lesquelles une plage d'horloge seuil de CPU est divisée ;
diviser chacune d'une plage d'horloge minimale d'une horloge limite d'une GPU correspondant à un niveau PID et d'une plage d'horloge seuil de GPU en un second nombre de sections et mapper, dans un ordre inverse, les sections dans lesquelles une plage d'horloge minimale d'une horloge limite d'une GPU est divisée en sections dans lesquelles une plage d'horloge seuil de GPU est divisée.

**8.** Dispositif électronique selon la revendication 7, dans lequel le processeur (120) est configuré pour :

définir l'horloge minimale de l'horloge limite de la CPU comme limite supérieure d'une section d'une plage d'horloge minimale d'une horloge limite d'une CPU mappée à une section à laquelle appartient une horloge système moyenne de la CPU, dans une plage d'horloge seuil de CPU correspondant au niveau PID déterminé ;
définir l'horloge minimale de l'horloge limite de la GPU comme limite supérieure d'une section d'une plage d'horloge minimale d'une horloge limite d'une GPU mappée à une section à laquelle une horloge système moyenne de la GPU appartient, dans une plage d'horloge seuil de GPU correspondant au niveau PID déterminé.

**9.** Dispositif électronique selon la revendication 1, dans lequel le processeur (120) est configuré pour :

définir une vitesse max virtuelle, qui est une vitesse maximale pouvant être définie comme une vitesse limite de protocole de contrôle de transmission (TCP), et définir une vitesse limite TCP pour chaque niveau PID dans la vitesse max virtuelle définie ;
diminuer une vitesse minimale d'une vitesse limite TCP correspondant à un niveau PID lorsque le niveau PID augmente.

**10.** Procédé exécuté par un processeur, le procédé comprenant :

la mesure d'une température de surface d'un dispositif électronique et la surveillance d'une charge de matériel et d'une occurrence d'événements prédéfinis ;
la détermination d'un niveau proportionnel-intégral-différentiel (PID) du dispositif électronique afin de maîtriser la génération de chaleur sur la base de la température de surface du dispositif électronique ;
la définition de chacune d'une horloge minimale d'une horloge limite d'une unité de traitement centrale (CPU) et d'une horloge minimale d'une horloge limite d'une unité de traitement graphique (GPU), sur la base du niveau PID déterminé et de la charge du matériel ; et
la détermination de l'horloge limite de la CPU pour qu'elle soit supérieure ou égale à l'horloge minimale définie de l'horloge limite de la CPU et la détermination de l'horloge limite de la GPU pour qu'elle soit supérieure ou égale à l'horloge minimale définie de l'horloge limite de la GPU de sorte que la température de surface du dispositif électronique converge vers une température cible correspondant au niveau PID déterminé ;

dans lequel la définition de chacune de l'horloge minimale de l'horloge limite de la CPU et de l'horloge minimale de l'horloge limite de la GPU comprend :

la définition d'une température cible correspondant à un niveau PID pour chaque niveau PID, d'une plage d'horloge minimale d'une horloge limite d'une CPU, et d'une plage d'horloge minimale d'une horloge limite d'une GPU ; et

lorsqu'un niveau PID augmente, l'augmentation d'une température cible correspondant à un niveau PID, la diminution d'une limite inférieure de la plage d'horloge minimale de l'horloge limite de la CPU, et la diminution d'une limite inférieure de la plage d'horloge minimale de l'horloge limite de la GPU.

11. Procédé selon la revendication 10, dans lequel la définition de chacune de l'horloge minimale de l'horloge limite de la CPU et de l'horloge minimale de l'horloge limite de la GPU comprend :

la détermination de l'horloge minimale de l'horloge limite de la CPU sur la base d'une horloge système moyenne de la CPU dans une plage d'horloge minimale d'une horloge limite d'une CPU correspondant au niveau PID déterminé ; et

la détermination de l'horloge minimale de l'horloge limite de la GPU sur la base d'une horloge système moyenne de la GPU dans une plage d'horloge minimale d'une horloge limite d'une GPU correspondant au niveau PID déterminé.

12. Procédé selon la revendication 10, dans lequel la définition de chacune de l'horloge minimale de l'horloge limite de la CPU et de l'horloge minimale de l'horloge limite de la GPU comprend la définition d'une plage d'horloge seuil de CPU pour déterminer une horloge minimale d'une horloge limite d'une CPU et d'une plage d'horloge seuil de GPU pour déterminer une horloge minimale d'une horloge limite d'une GPU, pour chaque niveau PID,

dans lequel la définition de la plage d'horloge de seuil de CPU et de la plage d'horloge de seuil de GPU comprend :

la mise en correspondance d'une taille d'une plage d'horloge seuil de CPU correspondant à un niveau PID à une taille d'une plage d'horloge minimale d'une horloge limite d'une CPU correspondant à un niveau PID correspondant et la mise en correspondance d'une taille d'une plage d'horloge seuil de GPU correspondant au niveau PID correspondant à une taille d'une plage d'horloge minimale d'une horloge limite d'une GPU correspondant au niveau PID correspondant;

la définition de la plage d'horloge seuil de CPU de telle sorte qu'une limite inférieure d'une plage d'horloge minimale d'une horloge limite d'une CPU correspondant à un niveau PID soit supérieure à une limite supérieure d'une plage d'horloge seuil de CPU correspondant à un niveau PID correspondant ; et

la définition de la plage d'horloge seuil de GPU de telle sorte qu'une limite inférieure d'une plage d'horloge minimale d'une horloge limite d'une GPU correspondant à un niveau PID soit supérieure à une limite supérieure d'une plage d'horloge seuil de GPU correspondant à un niveau PID correspondant.

13. Support de stockage lisible par ordinateur non transitoire stockant des instructions qui, lorsqu'elles sont exécutées par un processeur, amènent le processeur à réaliser le procédé selon la revendication 10.

FIG. 1

EP 4 485 136 B1

```
                        ┌──────────────┐
                        │    Start     │
                        └──────┬───────┘
                               │
                               │                    ╱ 210
          ┌────────────────────▼──────────────────────────┐
          │  Determine PID level of electronic device for  │
          │  heat generation control based on surface      │
          │  temperature of electronic device             │
          └────────────────────┬──────────────────────────┘
                               │
                               │                    ╱ 220
          ┌────────────────────▼──────────────────────────┐
          │  Set minimum clock of limit clock of CPU and   │
          │  minimum clock of limit clock of GPU, based    │
          │  on determined PID level and load of hardware  │
          └────────────────────┬──────────────────────────┘
                               │
                               │                    ╱ 230
          ┌────────────────────▼──────────────────────────┐
          │  Determine limit clock of CPU and limit clock  │
          │  of GPU such that surface temperature of       │
          │  electronic device converges to target         │
          │  temperature corresponding to determined PID   │
          │  level of electronic device                    │
          └────────────────────┬──────────────────────────┘
                               │
                        ┌──────▼───────┐
                        │     End      │
                        └──────────────┘
```

**FIG. 2**

FIG. 3

301

Temperature sensor — 311

Surface temperature

Monitoring unit — 312

Hardware load event information

PID controller — 320

**First level**

Target temperature : 38°C

CPU limit clock range: 2.9~1.6GHz
Minimum clock range of CPU limit clock : 1.8~1.6GHz
GPU limit clock range: 818~400MHz
Minimum clock range of GPU limit clock : 800~400MHz

**Second level**

Target temperature : 40°C

CPU limit clock range: 2.9~1.2GHz
Minimum clock range of CPU limit clock : 1.6~1.2GHz
GPU limit clock range: 800~300MHz
Minimum clock range of GPU limit clock : 700~300MHz

**Third level**

Target temperature : 42°C

CPU limit clock range: 2.9~1.0GHz
Minimum clock range of CPU limit clock : 1.4~1.0GHz
GPU limit clock range: 800~200MHz
Minimum clock range of GPU limit clock : 600~200MHz

**Fourth level**

Target temperature : 45°C

CPU limit clock range: 2.9~0.8GHz
Minimum clock range of CPU limit clock : 1.2~0.8GHz
GPU limit clock range: 800~100MHz
Minimum clock range of GPU limit clock : 500~100MHz

**FIG. 4**

25

500

| Type of event | PID level |
|---|---|
| Heavy load 501 | Fourth level |
| Third-party camera application 502 | Second level |
| Multi-window 503 | Third level |
| Smartview 504 | Third level |
| Desktop mode | Third level |
| Charging | Second level |

# FIG. 5

(MHz)

| |
|---|
| . . . |

| |
|---|
| 2000 - 1900 |

610 {
  1900 - 1800 ⟩ 611
  1800 - 1700 ⟩ 612
  1700 - 1600 ⟩ 613

630 {
  1600 - 1500
  1500 - 1400

620 {
  1400 - 1300 ⟩ 621
  1300 - 1200 ⟩ 622
  1200 - 1100 ⟩ 623

| |
|---|
| 1100 - 1000 |

| |
|---|
| 1000 - 900 |

| |
|---|
| . . . |

**FIG. 6**

(MHz)

| |
|---|
| . . . |

| |
|---|
| 1000 - 900 |

| |
|---|
| 900 - 800 |

800 - 700 } 711

710 {

700 - 600 } 712

600 - 500

730 {

500 - 400

400 - 300 } 721

720 {

300 - 200 } 722

| |
|---|
| 200 - 100 |

| |
|---|
| . . . |

**FIG. 7**

(MHz)

| | |
|---|---|
| . . . | |
| 500 | — 810 |
| 450 | |
| 400 | |
| 350 | |
| 300 | |
| 250 | — 821 |
| 200 | — 822 |
| 150 | — 823 |
| 100 | — 824 |
| . . . | |

**FIG. 8**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2015277395 A1

- US 2012311357 A